(19) Europäisches Patentamt
European Patent Office
Office européen des brevets

(11) EP 4 521 183 A1

(12) EUROPEAN PATENT APPLICATION
published in accordance with Art. 153(4) EPC

(43) Date of publication:
12.03.2025 Bulletin 2025/11

(51) International Patent Classification (IPC):
*G05D 1/02* (2020.01)

(21) Application number: 23795289.0

(22) Date of filing: 23.04.2023

(52) Cooperative Patent Classification (CPC):
G05D 1/243; G05D 1/648; G05D 2105/10;
G05D 2107/75; G05D 2109/15; G05D 2111/10;
Y02E 10/50

(86) International application number:
PCT/CN2023/090117

(87) International publication number:
WO 2023/207856 (02.11.2023 Gazette 2023/44)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 30.04.2022 CN 202210469203

(71) Applicant: Suzhou Radiant Photovoltaic
Technology Co., Ltd
Suzhou, Jiangsu 215164 (CN)

(72) Inventors:
• XU, Fei
Suzhou, Jiangsu 215164 (CN)
• DENG, Long
Suzhou, Jiangsu 215164 (CN)

(74) Representative: Murgitroyd & Company
165-169 Scotland Street
Glasgow G5 8PL (GB)

(54) **ROBOT AND LINEAR TRAVEL CONTROL METHOD THEREFOR, AND DATA PROCESSING DEVICE**

(57) The present application discloses a robot and robot straight line movement controlling method thereof. The robot walks along a straight line on the photovoltaic panel according to the preset route, with a high recognition accuracy and a high degree of automation.

FIG. 6

**Description**

CROSS REFERENCE TO RELATED APPLICATIONS

The present application claims priority of the China Patent Application No. 202210469203.X, filed on April 30, 2022 with the China National Intellectual Property Administration, titled "a robot and straight line movement controlling method thereof and data processing device", which is incorporated by reference in the present application in its entirety.

FIELD OF INVENTION

The present application relates to a robot and straight line movement controlling method thereof.

BACKGROUND OF INVENTION

Solar energy is a renewable and clean energy source. Photovoltaic power generation technology is becoming increasingly mature and has been widely used in countries around the world. However, a top surface of photovoltaic panels is prone to accumulation of dirt such as sand and dust, which will seriously affect the efficiency and output of power generation. Therefore, there is a need in the market for an automated equipment to clean the panel surface efficiently.
Since the photovoltaic panel is an inclined plane, the dirt and dust generated after cleaning will slide down from top to bottom. Therefore, an optimal cleaning method is to clean horizontally from top to bottom, row by row. During the cleaning process, it is necessary to ensure that every space on the panel surface is swept, without leaving any dead corners, and to minimize the areas that are repeatedly swept to improve work efficiency and reduce the amount of repetitive work. Therefore, it is necessary to ensure that the robot able to walk in a straight line according to the planned route without deviation.
Chinese patent CN106325276B discloses a determination method and a controlling method for a robot to drive straight on a slope plane, using the real-time direction data of the acceleration sensor to compare with the standard direction database. The shortcomings of this method are that, first, an accuracy of the acceleration sensor is very high, resulting in a high cost for the robot and a lack of competitiveness; second, since the tilt angles of photovoltaic panels are not completely consistent, the tilt angles of different panel arrays in the same power station may be different. Therefore, every time the robot is placed on the panel array, the standard orientation database needs to be reset, which is rather cumbersome to operate.

SUMMARY OF INVENTION

The purpose of the present application is to provide a robot and straight line movement controlling method thereof to solve the technical problems of high cost and troublesome operation of the robot existing in the prior art.
In order to achieve the above object, the present application provides a robot straight line movement controlling method, which includes the following steps: a direction setting step, controlling a robot to walk along a preset direction on a photovoltaic panel array; the robot includes a vehicle body; an image acquisition step, acquiring real-time images of both sides of the vehicle body, wherein a display content of the real-time image is a part of the photovoltaic panel array; a coordinate transformation step, establishing a world coordinate system with a center point of the vehicle body as an origin, and performing coordinate transformation processing on the real-time image of each frame; a reference line identification step, identifying a reference line from the real-time image in each frame; a reference line coordinate calculation step, calculating a coordinate set of the straight line where the reference line is positioned in the world coordinate system; a distance and angle comparison step, calculating a real-time distance between the reference line and the origin, and determine whether the real-time distance is within a preset distance threshold range; and at the same time, obtaining a real-time angle of the angle between an actual walking direction of the vehicle body and a preset direction, and determining whether the real-time angle is within a preset angle threshold range; and a direction adjustment step, controlling the vehicle body to adjust the direction of movement to the left or to the right when the real-time distance outside the preset distance threshold range and the real-time angle within the preset angle threshold range until the distance difference is within the preset distance threshold range, returning to the direction setting step.
In order to achieve the above object, the present application also provides a data processing device, including a memory for storing an executable program code; and a processor connected to the memory, and running a computer program corresponding to the executable program code by reading the executable program code to execute the robot straight line movement controlling method.
In order to achieve the above object, the present application also provides a robot including the data processing device mentioned above.
Any of the above technical solutions has the following advantages or beneficial effects: providing a robot and straight line movement controlling method thereof, using real-time images obtained by the camera to locate the distance between the vehicle body and the edge of the photovoltaic panel array, and using image recognition technology to determine the position of the reference line identified in each frame of real-time image, and the identification accuracy of the reference line is high. The robot controls the vehicle to walk along a straight line on the photovoltaic panel array according to the relative position of the reference line and the vehicle, and automatically adjusts the direction to return to the preset route when the vehicle deviates from the preset route during the walking process, with a high degree of automation.

The vehicle body is controlled to be reoriented to the left so as to cause the robot to walk along a straight line on the photovoltaic panel according to a predetermined route when the reference line is positioned on the left side of the vehicle body and the distance difference is greater than the maximum threshold, and the real-time angle of the gyroscope is within the preset angle threshold range, or when the reference line is positioned on the right side of the vehicle body and the distance difference is less than a minimum threshold value and the real-time angle of the gyroscope is within the preset angle threshold range.

The vehicle body is controlled to be reoriented to the right so as to cause the robot to walk along a straight line on the photovoltaic panel according to a predetermined route when the reference line is positioned on the right side of the vehicle body and the distance difference is greater than a maximum threshold and the real-time angle of the gyroscope is within the preset angle threshold range, or, when the reference line is positioned on the left side of the vehicle body and the distance difference is less than a minimum threshold and the real-time angle of the gyroscope is within the preset angle threshold range.

DESCRIPTION OF FIGURES

The technical solutions and other beneficial effects of the present application will be apparent through a detailed description of the specific embodiments of the present application in conjunction with the accompanying figures.

FIG. 1 is a schematic structural diagram of a robot walking in a photovoltaic panel array according to one embodiment of the present application.

FIG. 2 is a functional diagram of the robot according to one embodiment of the present application.

FIG. 3 is a schematic structural diagram of the robot from a first perspective according to one embodiment of the present application.

FIG. 4 is a schematic structural diagram of the robot from a second perspective according to one embodiment of the present application.

FIG. 5 is a schematic structural diagram of the robot from a second perspective according to one embodiment of the present application.

FIG. 6 is a flow chart of a robot linear movement controlling method according to one embodiment of the present application.

FIG. 7 is a flow chart of the reference line identification steps according to one embodiment of the present application.

FIG. 8 is a flow chart of the direction adjustment step according to one embodiment of the present application.

DETAILED DESCRIPTION OF EMBODIMENTS

The technical solutions in the embodiments of the present application will be clearly and completely described below with reference to the accompanying figures in the embodiments of the present application. Obviously, the described embodiments are only some of the embodiments of the present application, but not all of the embodiments. Based on the embodiments in the present application, all other embodiments obtained by those skilled in the art without inventive steps shall fall within a scope of protection of the present application.

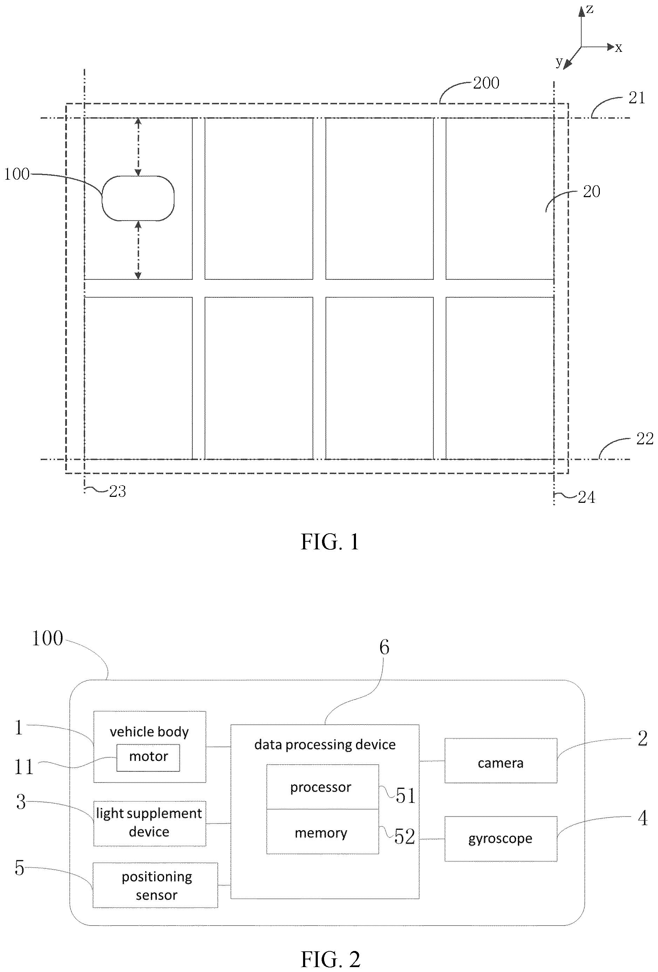

As shown in FIG. 1, this embodiment provides a robot 100 for performing cleaning operations on an inclined photovoltaic panel array 200. The four edge lines of the photovoltaic panel array 200 include an upper edge line 21 and a lower edge line 22 that are parallel to each other, and a left edge line 23 and a right edge line 24 are parallel to each other. As shown in FIG. 1, an extension direction of the upper edge line 21 is the first direction x, and an extension direction of the left edge line 23 is the second direction y. The photovoltaic panel array 200 is an array planar structure composed of more than two photovoltaic panels 20. An uninterrupted metal frame (not shown) is provided at the edge of each photovoltaic panel 20. In this embodiment, the photovoltaic panel 20 is rectangular shape, its four frames are all made of aluminum alloy. The four edge lines of the photovoltaic panel array 200 are composed of frames of multiple photovoltaic panels arranged on a same straight line.

As shown in FIG. 2, the robot 100 includes a vehicle body 1, a camera 2, a light supplement device 3, a gyroscope 4, a positioning sensor 5, and a data processing device 6. The camera 2, the light supplement device 3, the gyroscope 4, and the positioning sensor 5 are all connected to the data processing device 6.

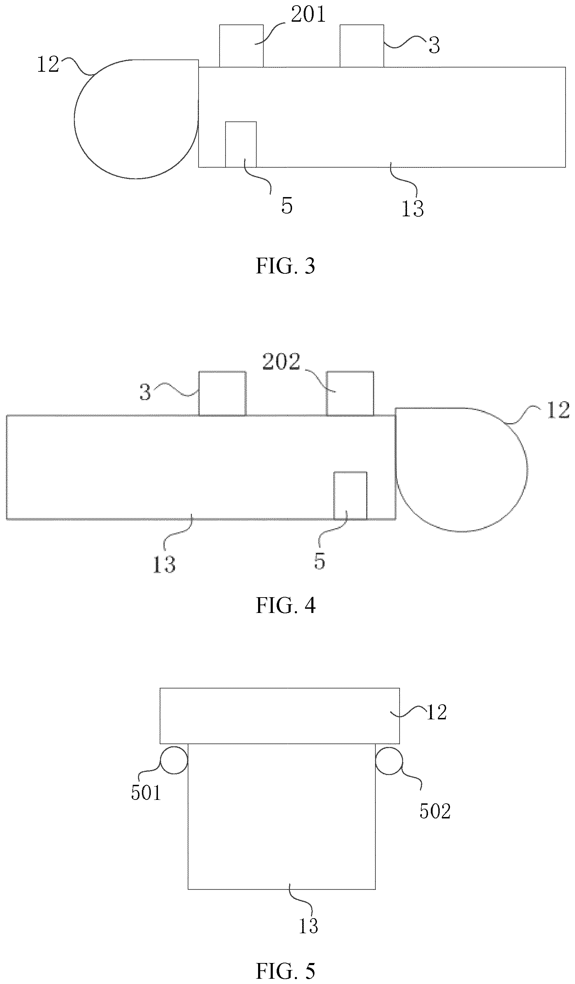

As shown in FIGs. 1 to 5, the vehicle body 1 can walk on the photovoltaic panel array 200. The vehicle body 1 includes a motor 11, a machine head 12, and a body 13. The motor 11 is installed in the machine head 12 or the body 13 to provide a power source, enabling the robot 100 to move back and forth across the photovoltaic panel array 200 in the first direction x or the second direction y. A cleaning portion is provided at a front or a rear end of the vehicle body 1. The cleaning portion in this embodiment is preferably one or more roller brushes. The vehicle body 1 is provided with a controllable roller brush motor to drive the roller brushes to rotate.

Since the photovoltaic panel array is an inclined plane, in order to improve the grip of the robot 100 and prevent the robot 100 from slipping off the panel, an adsorption device is usually provided on a bottom surface of the robot 100. However, there is usually a gap between two adjacent rows of panels. If the gap is always positioned below the robot 100 while the robot 100 is walking, it will cause the adsorption device to fail. Therefore, in order to prevent the robot 100 from slipping, the robot 100 cannot walk over the gap between two rows of panels when cleaning each row of photovoltaic panels.

During the cleaning process, dust, garbage, and sewage will slide down along the panel surface. In order to ensure the cleaning effect, the robot 100 should start from a lower left corner or a lower right corner of the photovoltaic panel matrix and walk in a straight line along the left edge line or the right edge line of the photovoltaic panel matrix from an lower end of the matrix to an upper end of the matrix, then walk along the first direction x on the matrix, turn left or right at the edge of the matrix, and continue walking in an opposite direction along the first direction x on the matrix. A height at which the vehicle body of the robot 100 walks in the first direction x is lower than a height at which it walked in the first direction x previously.

Before the robot 100 is placed on the photovoltaic panel array 200, a size of the photovoltaic panel array 200 is an unknown parameter to the robot 100. Since the sizes of the photovoltaic panel array 200 are different, the optimal walk routes of the robot 100 on the panel array are different, the number of U-turns on the same row of panels are also different, and its operating modes are also different. The robot 100 needs to automatically calculate the dimensions of each panel in the array of photovoltaic panels, in particular the length of each row of panels in its tilted direction, a number of times and distances that the robot 100 needs to walk back and forth on each row of panels are calculated based on the dimensions of each panel in the array of photovoltaic panels, to calculate the number of times and the position that the robot 100 needs to turn around, to ensure that each corner of each row of panels can be cleaned.

An area of the panel array through which the vehicle body 1 passes in each walk in the first direction x may be defined as a cleaning channel, each cleaning channel being equal to or smaller than a width of the cleaning portion (roller brush), and the cleaning portion (roller brush) of the vehicle body 1 may extend outside of the cleaning channel as the vehicle body 1 walks within the one cleaning channel.

The at least one photovoltaic panel 20 of a same row may be divided into N cleaning channels extending in the first direction x from the left side of the photovoltaic panel array 200 to the right side thereof, with N being an integer portion of a quotient of the length of the photovoltaic panel 20 of this row in the tilted plane and a width of the cleaning portion plus one. For example, if a length of a row of panels is 2 meters, a width of the roller brush is 0.7 meters, and N is 3, the row of panels needs to be divided into three transverse cleaning channels, and the cleaning robot 100 reciprocates three times before the entire row of panels can be swept completely without leaving any cleaning dead ends. The three cleaning channels are a first channel, a second channel, and a third channel from top to bottom, and the widths of the three sweeping channels can be set to 0.7 meters, 0.6 meters, and 0.7 meters, respectively, so that when the vehicle body 1 walks through the second channel in the middle, the roller brushes will be extended to the first channel and the third channel at the edges of the two ends of the roller brushes.

In this solution, how to ensure that the vehicle body 1 will not deviate from its preset direction during walk is a key technical issue when the vehicle body walks straight in a certain cleaning channel.

The camera 2 is installed on a left outer wall and a right outer wall of the vehicle body 1. The lens of the camera 2 faces the photovoltaic panel array 200 to acquire images from both sides of the vehicle body 1. The camera 2 positioned on a left side of the vehicle body 1 is a left camera 201, and the camera 2 positioned on a right side of the vehicle body 1 is a right camera 202.

The positioning sensors 5 are arranged on the left side of the vehicle body 1 and the right side of the vehicle body 1 and are fixed to a bottom of the vehicle body, or one end thereof is fixed to the side wall of the vehicle body 1 and the other end extends to the bottom of the vehicle body 1. Each positioning sensor 5 is positioned in the same straight line as a camera 2. The positioning sensor 5 positioned on the left side of the vehicle body 1 is a left positioning sensor 501, and the positioning sensor 5 positioned on the right side of the vehicle body 1 is a right positioning sensor 502. The left and right positioning sensors are metal sensors 5, and establishing a communication connection to the data processing device 6. The metal sensor 5 is configured to detect metal substances within a certain distance. It has the characteristics of small detection range and high sensitivity. A general detection range is tens of millimeters.

An electrical signal is generated and sent to the data processing device 6 when the distance between the metal sensor 5 and the metal frame is less than a preset threshold (in this embodiment, the preset threshold is 2.5 cm). In this embodiment, a vertical distance between the metal sensor 5 and the photovoltaic panel 20 is about 2 cm. That is to say, when the metal sensor 5 is positioned directly above the metal frame, the projection of the metal sensor 5 on the photovoltaic panel is positioned on the metal frame, and an electrical signal can be generated in the metal sensor 5.

The robot 100 is initially placed at the lower left corner or the lower right corner of the photovoltaic panel array. The vehicle body should move straight along the second direction y when the vehicle body is first started wherein the metal sensor 55 on the left side or the right side of the vehicle body is always positioned directly above the left edge line or the right edge line of the photovoltaic panel array.

The vehicle body 1 automatically turns or makes a U-turn and walks straight along the first direction x when the vehicle body 1 walks to the upper edge line or the lower edge line of the photovoltaic panel array 200. The metal sensor 5 on the left side or the right side of the vehicle body 1 is always positioned directly above the metal frame of the upper edge line or the lower edge line of the photovoltaic panel array 200.

Although there are gaps between the plurality of photovoltaic panels 20 in the photovoltaic panel array 200, widths of the gaps are small. Even if the metal sensor 5 is positioned directly above the gap, it can still sense the metal frames on both sides of the gap. Therefore, as long as the vehicle body 1 moves straight along the edge of the photovoltaic panel array at the array edge, there is always a metal frame positioned within the sensing range of the metal sensor 5, and the metal sensor 5 will continue to generate electrical signals.

A projection of the metal sensor 5 on the top surface of the photovoltaic panel 20 is outside the metal frame when the vehicle body 1 deviates from its preset walking direction, there is no metal within the effective sensing range of the metal sensor 5, and the metal sensor 5 cannot generate an electrical signal. The data processing device 6 includes a control system of the robot 100. According to the real-time signal condition of the metal sensor 5, it monitors whether the vehicle body 1 is walking along a straight line and determines in real time whether the vehicle body 1 deviates during walk. When the vehicle body 1 deviates, the control system adjust the direction appropriately so that the vehicle body 1 returns to its original route.

The above method is only suitable for the situation where the robot 100 walks in a straight line along the edge of the photovoltaic panel array 200. If the robot 100 needs to walk in a middle of the photovoltaic panel array 200, the metal sensors 5 on its left and right sides cannot be positioned directly above the metal frame. Therefore, it is necessary to find at least one straight line as a reference line for the robot 100.

The two cameras on left and right sides of the robot 100 can acquire images of one or two sides of the photovoltaic panel array in real time when the robot 100 walks in the middle of the photovoltaic panel array 200. The data processing device 6 uses an appropriate algorithm to perform coordinate transformation processing on the edge image in the real-time picture, thereby obtaining a real-time distance between the center point of the vehicle body 1 and the edge in real time while the robot 100 is walking, and uses the edge of the photovoltaic panel array as a reference line, that is, it can be judged whether the distance between the vehicle body 1 and the reference line is constant. If it does not change, it means that the vehicle body 1 is walking straight along the preset direction. If it becomes larger or smaller, the data processing device 6 can control the vehicle body 1 to adjust its walking direction appropriately.

In this embodiment, during the process of cleaning the photovoltaic panel 20, the camera 2 or the positioning sensor 5 can be used alone to determine whether the vehicle body 1 deviates from the preset route. Of course, the camera 2 and the positioning sensor 5 can also be used at the same time.

The robot 100 provided in this embodiment acquires images on both sides of the vehicle body 1 in real time through the camera 2, and performs coordinate transformation processing on each frame of the real-time image through coordinate transformation, so as to covert the coordinates of the edges of the photovoltaic panel array in the image into coordinates in the world coordinate system, a distance between the vehicle body 1 and the edges of the photovoltaic panel array 200 on its left and right sides is obtained, so that the robot 100 keeps walking in a straight line on the photovoltaic panels 20 according to the preset route.

The robot 100 needs to walk back and forth laterally on the photovoltaic panel array 200 in the row more than three times when at least one photovoltaic panel 20 in the same row can be divided into more than three cleaning channels extending in the first direction.

Specifically, as shown in FIG. 1, during the robot 100 walks along the first direction x to clean the photovoltaic panel array 200, the position of the vehicle body 1 on the photovoltaic panel array 200 can be obtained in real time through the positioning sensors 5 when the robot 100 close to the upper metal frame and the lower metal frame of the photovoltaic panel 20, that is, the robot 100 is positioned the first cleaning channel and the final cleaning on the photovoltaic panel 20. The position of the vehicle body 1 on the photovoltaic panel array 200 can be obtained in real time through the camera 2 images on both sides of the vehicle body 1 when the robot 100 is positioned in other cleaning channels. Of course, it can only use the camera 2 instead of the positioning sensor 5 to obtain the position of the vehicle body 1 on the photovoltaic panel array 200 in real time when the robot 100 is cleaning the entire photovoltaic panel array 200. Theoretically, the robot 100 can ensure that it walks in a straight line by finding a reference line. The reference line can be acquired by the camera or the metal sensor 5. Considering an accuracy of image recognition and metal recognition, the robot 100 can also use two reference lines to correct the direction at the same time to improve accuracy and reduce recognition errors.

The photovoltaic panel array 200 needs to operate normally when there is sufficient sunlight during the day. The cleaning work of the panel by the robot 100 will affect the power generation efficiency of the photovoltaic panel array 200 to a certain extent. Therefore, the photovoltaic panel cleaning operation can also be completed at night, but the surface light of the panel array 200 is insufficient at night, which will affect the brightness of the panel image acquired by the camera 2. If the brightness of the image is insufficient, the accuracy of image recognition will be reduced, and the straight movement of the vehicle body cannot be guaranteed. For this reason, this embodiment specially sets up two light supplement devices 3, which are respectively positioned next to the two cameras 2 and are oriented in a same direction.

The data processing device 6 issues a control instruction to start the light supplement device 3 when the brightness of the image acquired by the camera 2 is less than or equal to the preset brightness threshold. Conversely, there is no need to start the light supplement device 3 when the brightness of the image is greater than the preset brightness threshold. The light supplement device 3 is a flash, the user can determine whether the light supplement device 3 is in the working state according to whether the light supplement device 3 flashes. If the light supplement device 3 is in a flashing state, it means that the light supplement device 3 is in the working state; when the light supplement device 3 is in an extinguished state, it means that the light supplement device 3 is in a shutdown or standby state. Therefore, the light supplement device 3 can well solve the problem that the robot 100 cannot walk in a straight line on the photovoltaic panel array 200 in a low-light environment, allowing the robot 100 to operate normally at night.

A gyroscope 4 is installed in the vehicle body 1 to obtain a real-time walking direction of the vehicle body 1 in real time, that is, a direction of a front of the vehicle, and can transmit a real-time angle of the vehicle body 1 to the data processing device 6. The gyroscope 4 may be a fiber optic gyroscope or a laser gyroscope. In this embodiment, in addition to using the gyroscope 4 to obtain the real-time walking direction of the vehicle body 1, other sensors can also be used instead. It is sufficient to be able to obtain the real-time direction of walk of the vehicle body 1 and transmit the real-time angle of the vehicle body 1 to the data processing device 6, without being particularly limited herein.

The data processing device 6 is provided in the vehicle body 1, and includes a memory 52 and a processor 51. Specifically, the memory 52 is configured to store executable program codes. The processor 51 is connected to the memory 52 and runs the computer program corresponding to the executable program code by reading the executable program code to execute the straight line movement controlling method of the robot 100 mentioned below.

The robot 100 provided in this embodiment uses the camera to obtain the real-time images of both sides of the vehicle body 1, and uses the real-time images to determine a distance between the vehicle body 1 and the edge of the photovoltaic panel, thereby performing data fusion with the real-time angle acquired by the gyroscope, i.e., by calculating the real-time distance between the reference line and the origin in each frame of the real-time image, and at the same time acquiring the real-time angle of the angle between the temporal direction of walk of the vehicle body 1 and the preset direction, and when the real-time distance is outside the range of the preset distance thresholds and the real-time angle is within the preset angle thresholds range, the vehicle body is controlled to adjust the direction of walk to the left or to the right until the difference of the distances is within the range of the preset distance thresholds, so as to ensure that the robot 100 can maintain a straight line of walk according to the preset route on the photovoltaic panel array 200.

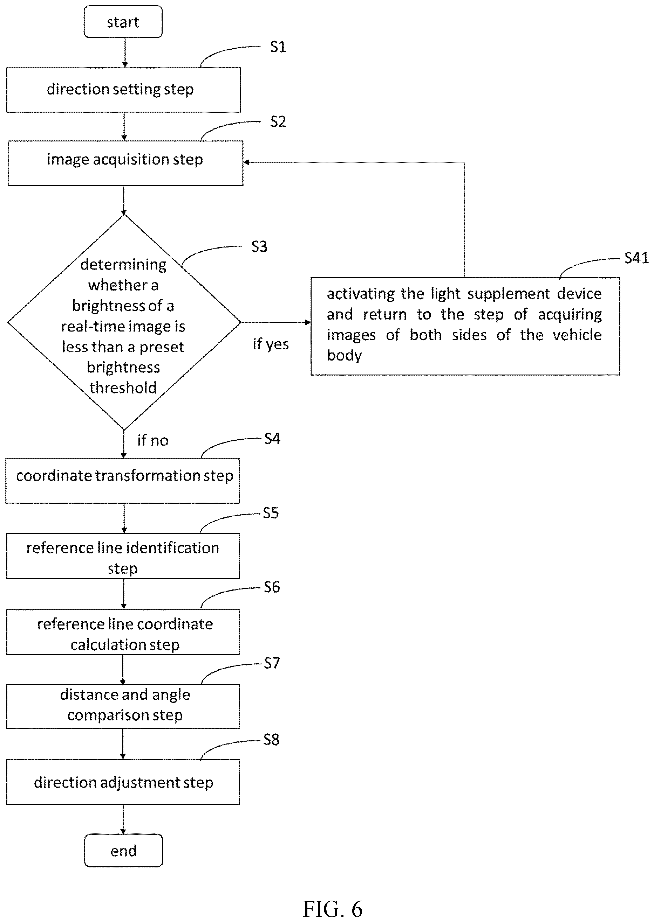

As shown in FIG. 6, this embodiment provides a linear walk controlling method of the robot 100 mentioned above, including the following steps S1) to S8).

S1) Direction setting step, controlling a robot 100 to walk along a preset direction on a photovoltaic panel array 200; the robot 100 includes a vehicle body 1 with cameras 2 on the left and right sides facing the photovoltaic panel array 200 so that it can acquire the edges of the array.

As shown in FIG. 1, the robot 100 walks along the first direction x on the photovoltaic panel array 200. The left camera 201 is arranged on a side of the vehicle body 1 close to the upper edge line 21, and the right camera 202 is arranged on a side of the vehicle body 1 away from the upper edge line 21. The gyroscope 4 is configured to obtain the real-time walking direction of the vehicle body 1 in real time when the robot 100 is walking.

S2) Image acquisition step: acquiring real-time images of both sides of the vehicle body 1, wherein the display content of the real-time image is a part of the photovoltaic panel array 200.

Specifically, the left camera 201 acquires a real-time image of the left side of the vehicle body 1, the right camera 202 acquires a real-time image of the right side of the vehicle body 1, and the left camera 201 and the right camera 202 transmit the acquired real-time images to the output processing device.

S3) Determining whether a brightness of the real-time image is less than a preset brightness threshold; if yes, S41) activating the light supplement device 3 and return to the step of acquiring images of both sides of the vehicle body 1.

Specifically, the output processing device performs model changes on the acquired real-time image, and then determines whether the brightness of the real-time image is within a set threshold range. If the brightness of the real-time image is less than a preset brightness threshold, it is necessary to activate the light supplement device 3 on the vehicle body 1, otherwise, perform the next step. The light supplement device 3 can well solve the problem that the robot 100 cannot walk in a straight line on the photovoltaic panel array 200 in an insufficient-light environment.

S4) The coordinate transformation step is to establish a world coordinate system with a center point of the vehicle body 1 as the origin, and perform coordinate transformation processing on the real-time image of each frame to obtain image parameters that are basically consistent with a scene on a top surface of the panel array 200, that is, the world coordinates.

Specifically, it can be known from a perspective transformation formula;

$$[x', y', w'] = [u, v, w] \begin{bmatrix} a_{11} & a_{12} & a_{13} \\ a_{21} & a_{22} & a_{23} \\ a_{31} & a_{32} & a_{33} \end{bmatrix}.$$

In the formula, u, v, w are the original image coordinates, x', y', w' are the corresponding transformed image coordinates. u and x' are the distance in the first direction x, v and y' are the distance in the second direction y, w and w' are the distance in the third direction z, wherein the third direction z is perpendicular to the first direction x and the second direction y;

$\begin{bmatrix} a_{11} & a_{12} & a_{13} \\ a_{21} & a_{22} & a_{23} \\ a_{31} & a_{32} & a_{33} \end{bmatrix}$ is transformation matrix.

The formula of the straight line equation is : $A * x - B * y + C = 0$: wherein A and B are not all zero, a coordinate of point P in the world coordinate system is( $x_0$, $y_0$ ), then the distance from the point to the straight line is:

$$d = \left| \frac{A*x_0 + B*y_0 + c}{\sqrt{A^2 + B^2}} \right|$$

Therefore, based on the real-time images acquired by the cameras 201 on the left and right sides of the vehicle body 1, and through the above-mentioned perspective transformation formula, the world coordinate system is established with the center point of the vehicle body 1 as the origin, and for each real-time image frame is transformed into an image in the world coordinate system, after the transformation, a distance between each pixel point in the image and an origin of the image is a real physical distance in the world coordinate system.

S5) Reference line identification step: identifying a reference line from the real-time image of each frame, and find the coordinates of each pixel point on the reference line in the world coordinate system from the image parameters after coordinate transformation of each frame. In the real-time image of the photovoltaic panel array 200, the photovoltaic panel 202 is generally in a dark color, such as black, dark blue, or dark gray, and the panel frame is generally made of silver-white aluminum alloy. A contrast in the image is very clear, but since the frame has a certain width, the two edge lines of the frame are an inner edge line and an outer edge line respectively. The inner edge line directly connected to the top surface of the photovoltaic panel 20 is preferably used as the reference line to improve the accuracy of identification.

S6) Reference line coordinate calculation step, calculating a coordinate set of the straight line where the reference line is positioned in the world coordinate system, and find the coordinate set of the straight line where the reference line is positioned in the world coordinate system from the image parameters after coordinate transformation of each frame.

S7) Distance and angle comparison step, calculating the real-time distance between the reference line and the origin, and determine whether the real-time distance is within a preset distance threshold range. At the same time, obtaining a real-time angle of the angle between an actual walking direction of the vehicle body 1 and a preset direction, and determining whether the real-time angle is within a preset angle threshold range.

Specifically, the robot 100, during its operating, utilizing the gyroscope 4 to obtain the real-time forward direction of the vehicle body 1, that is, the direction in which the front end of the vehicle is facing, and comparing this direction with the preset direction, thereby obtaining a real-time angle (i.e., the real-time angle of the gyroscope) of the angle between the actual direction of walk of the vehicle body 1 and the preset direction, and determining whether the real-time angle is within the preset angle threshold range. When the real-time angle is within the preset angle threshold range, it is indicated that there is no deviation in the real-time forward direction of the vehicle body 1, and there is no need to adjust the direction of walk of the vehicle body 1. When the real-time angle is not within the preset angle threshold range, then it is indicated that the real-time forward direction of the vehicle body 1 is deviated, and the direction of walk of the vehicle body 1 needs to be adjusted (i.e., proceed to a next step). **In** the process of adjusting the real-time forward direction of the vehicle body 1, the real-time forward direction of the vehicle body 1 may also deviate from the previously preset route, such as an overall upward or an downward shift, at which time the distance from the vehicle body 1 to the reference line on both sides is not the same as that of the original, and therefore, it is necessary to calculate the real-time distance from the reference line to the origin, and to determine whether or not the real-time distance is within the range of the preset distance threshold. When the real-time distance is within the range of the preset distance threshold, it means that there is no deviation between the real-time forward direction of the vehicle body 1 and the previously preset route. When the real-time distance is not within the range of the preset distance threshold, it means that there is a deviation between the real-time direction of advancement of the vehicle body 1 and the previously preset route, and it is necessary to adjust the real-time distance from the vehicle body 1 to the reference line and the origin on both sides (i.e., proceed to the next step).

S8) Direction adjustment step: determining in real time whether the real-time angle is within the preset angle threshold range, and simultaneously determine in real time whether the real-time distance is within the preset distance threshold range.

When the real-time angle is outside the preset angle threshold range, it means that the vehicle body 1 seriously deviates from the preset direction at this time, which may be caused by a large-scale skidding accident of the vehicle body 1. It is necessary to control the vehicle body 1 to adjust its direction of walk to the left or to the right, so that the walking direction is consistent with the preset direction, so that the real-time angle is within the preset angle threshold range. In some embodiments, it is also possible to first determine whether the position of the vehicle body 1 is within the preset cleaning channel. If not, adjusting the vehicle body 1 to return to its preset route and return to the position before the skidding accident; and then control the vehicle body 1 to adjust its walking direction to the left or right so that its walking direction is consistent with the preset direction.

When the real-time distance is outside the preset distance threshold range and the real-time angle is within the preset angle threshold range, it means that an overall deviation of the vehicle body 1 has occurred at this time, but the front direction of the vehicle is basically correct. Controlling the vehicle body 1 to adjust the walking direction to the left or the right until the distance difference is within the preset distance threshold range, then return to the direction setting step S1). For example: when the vehicle body is walking laterally in the first direction x from the right edge line to the left edge line of the photovoltaic panel array, the left camera 201 detects a first distance between the vehicle body and the lower edge line in real time, and the right camera detects a second distance between the vehicle body and the upper edge line in real time. If the vehicle body always walks in a straight line in the first direction, the first distance and the second distance are only within the preset distance threshold range. If the first distance becomes larger and the second distance becomes smaller, it indicates that the vehicle body is leaning to the right and needs to be adjusted to the left, and the data processing device issues an instruction to control the vehicle body to turn to the left, and when the first distance and the second distance return to the preset distance threshold range, the direction is adjusted again to control the vehicle body to walk in the preset direction. Similarly, if the first distance becomes smaller and the second distance becomes larger, it indicates that the vehicle body is leaning to the left and needs to be adjusted to the right, and the data processing device issues instructions to control the vehicle body to turn to the right, when the first distance and the second distance change back to within the range of the preset distance threshold, the direction is adjusted again to control the vehicle body to walk along the preset direction.

When the real-time distance is within the preset distance threshold range and the real-time angle is within the preset angle threshold range, it means that the vehicle body 1 has not deviated at this time, and the front direction of the car is basically correct, and there is no need to make any direction adjustment, and return to the direction setting step S1).

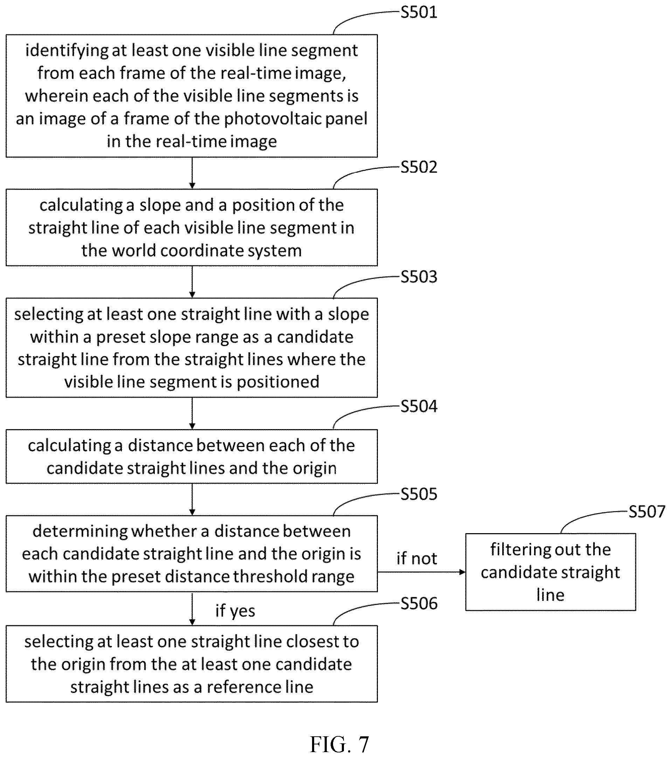

As shown in FIG. 7, S5) the reference line identification step specifically includes the following steps:

S501) Identifying at least one visible line segment from each frame of the real-time image, wherein each of the visible line segments is an image of a frame of the photovoltaic panel 20 in the real-time image. The photovoltaic panel is dark and the panel frame is silver-white, and after image binarization, the visible line segment corresponding to the panel frame is very clear. Since the frame is of a certain width, the two edges of the frame are an inner frame and an outer frame, and it is preferred to use the inner edge that is directly connected to the top surface of the photovoltaic panel as the reference line, and the color difference between the two is more obvious to enhance an accuracy of identification.

S502) Calculating a slope and a position of the straight line of each visible line segment in the world coordinate system.

Specifically, the data processing device 6 obtains the slope and position of the straight line of each visible line segment in the world coordinate system according to the straight line where each visible line segment is positioned and

$$\frac{y - y_1}{y_2 - y_1} = \frac{x - x_1}{x_2 - x_1}$$

according to the straight line equation $\frac{y - y_1}{y_2 - y_1} = \frac{x - x_1}{x_2 - x_1}$ . Within the field of view of a camera, the borders of the photovoltaic panel array 200 in four directions are clearly visible. Therefore, in this step, the data processing device 6 can recognize, by means of the camera, at least one panel border at two edge lines parallel to the extension direction of the right and left side walls of the vehicle body 1, and can also recognize part of the panel frame at two edge lines perpendicular to the extension direction of the right and left side walls of the vehicle body 1. For example, during lateral walking of the vehicle body 1 in the first direction x from the right edge line of the photovoltaic panel array 200 to the left edge line, the left camera 201 acquires in real time an image of the lower edge line of the photovoltaic panel array 200, and the right camera 202 acquires in real time an image of the upper edge line of the panel array 200. However, the left camera 201, the right camera 202 both acquire images of portions of the left edge line, the right edge line of the photovoltaic panel array 200.

S503) Selecting at least one straight line with a slope within a preset slope range as a candidate straight line from the straight lines where the visible line segment is positioned. The reference lines described in this embodiment are the two edge lines parallel to the direction of extension of the right and left side walls of the vehicle body, and the two edge lines perpendicular to the direction of extension of the right and left side walls of the vehicle body are not to be used as the reference lines, and are therefore to be screened in order to exclude interference. The preset slope range is a slope range in which the slope of a straight line parallel to the extension direction of the left wall and the right side wall of the vehicle body 1 as a center number, and the slope range deviates by about 3% to 5% in both forward and reverse directions.

S504) Calculating a distance between each of the candidate straight lines and the origin.

Specifically, the data processing device 6 calculates the distance between each of candidate straight lines and the origin. Since the vehicle body 1 has a certain size and the origin is a center point of the vehicle body 1, the distance from the candidate straight line to the origin can be defined as a distance between the vehicle body 1 and the candidate straight line.

S505) Determining whether a distance between each candidate straight line and the origin is within the preset distance threshold range. If not, S507) filtering out the candidate straight line. In a photovoltaic power station, in order to improve space utilization, the distance between the multiple photovoltaic panel 20 matrices will be relatively close. In a field of view of the camera, in addition to the image of the frame of the photovoltaic panel matrix where the vehicle body 1 is positioned, it is also possible to show partial images of the borders of other photovoltaic panel matrices, which can also be recognized as candidate straight lines. However, these borders are sometimes not photographed when the vehicle body 1 is walking, their extension directions and distances from the vehicle body 1 are not very informative for the body 1, so they are to be deleted. If there are straight-shaped light-colored debris on the photovoltaic panel array 200, they may be identified as candidate straight lines, but their extension direction has no reference value and must be deleted to eliminate interference.

S506) Selecting at least one straight line closest to the origin from the at least one candidate straight lines as a reference line. After all the straight lines that may cause interference are removed in step S505), the remaining candidate straight lines are only the inner edge line and the outer edge line of the two frames parallel to the extension direction of the left and right side walls of the vehicle body 1, due to other background patterns may be near the outer edge lines, preferably the inner edges directly connected to the photovoltaic panel 20 with obvious contrast and clear boundaries.

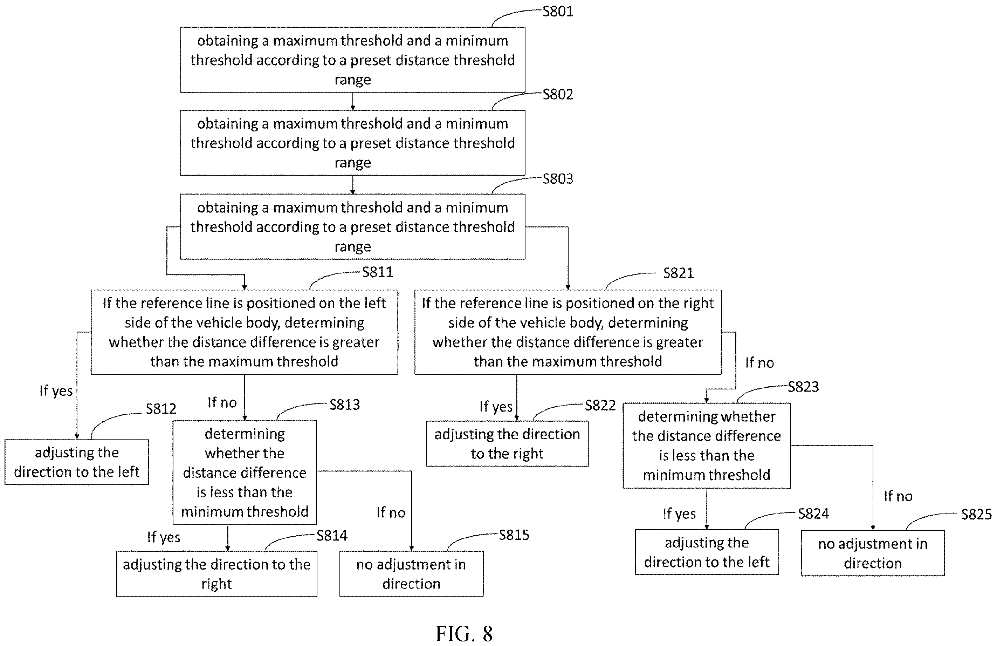

As shown in FIG. 8, the direction adjustment step in S8) includes the following steps:

S801) Obtaining a maximum threshold and a minimum threshold according to the preset distance threshold range.

S802) Obtaining a camera number corresponding to the real-time image showing the reference line, the left camera 201 or the right camera 202. Specifically, the camera 2 corresponding to each real-time image that acquires and displays the reference line is numbered, and it is determined whether the camera that acquired the reference line is on the left side or the right side of the vehicle body.

S803) determining a relative position of the reference line and the vehicle body 1 according to a relative position of the camera and the vehicle body, and determining whether the real-time image displaying the reference line is on the left side of the vehicle body or right side of the vehicle body.

If the reference line is positioned on the left side of the vehicle body 1,
S811) Determining whether the distance difference is greater than the maximum threshold. If yes, S812) Adjusting the direction to the left; if not, S813) Determining whether the distance difference is less than the minimum threshold. If yes, S814) Adjusting the direction to the right; If not, S815) no adjustment in direction.

If the reference line is positioned on the right side of the vehicle body 1,
S821) Determining whether the distance difference is greater than the maximum threshold. If yes, S822) Adjusting the direction to the right; if not, S823) Determining whether the distance difference is less than the minimum threshold. If yes, S824) Adjusting the direction to the left; If not, S825) no adjustment in direction.

Therefore, through the adjustment of the above steps, the robot 100 can maintain straight walking within the preset walking threshold range.

The above steps S811 to 814 are executed synchronously with steps S821 to 824, and may also be executed sequentially in other embodiments. Step S811 and step S813 are executed sequentially, and may also be executed synchronously in other embodiments. Step S821 and step S823 are executed sequentially, and may also be executed synchronously in other embodiments.

The straight line movement controlling method of the robot 100 provided in this embodiment uses the real-time image acquired by the camera to position the distance between the vehicle body 1 and the edge of the photovoltaic panel array 200, and identifies the reference line from each frame of real-time image through coordinate changes.

The vehicle body 1 is controlled to adjust its direction to the left when the reference line is positioned on the left side of the vehicle body 1 and the distance difference is greater than the maximum threshold, and the real-time angle of the gyroscope 4 is within the preset angle threshold range, or, the vehicle body 1 is controlled to adjust its direction to the left when the reference line is positioned on the right side of the vehicle body and the distance difference is less than the minimum threshold and the real-time angle of the gyroscope is within the preset angle threshold range.

The vehicle body is controlled to adjust its direction to the right when the reference line is positioned on the right side of the vehicle body and the distance difference is greater than the maximum threshold, and the real-time angle of the gyroscope is within the preset angle threshold range, or the vehicle body is controlled to adjust its direction to the right when the reference line is positioned on the left side of the vehicle body when the distance difference is less than the minimum threshold and the real-time angle of the gyroscope 4 is within the preset angle threshold range.

Therefore, the robot 100 walks along a straight line according to the preset route on the photovoltaic panel 20 with high recognition accuracy and high degree of automation.

The above is a detailed introduction to a robot and its linear walk controlling method provided by the embodiments of the present application. Specific embodiments are used in this article to illustrate the principles and implementation methods of the present application. The description of the above embodiments is only used to help understanding the technical solution and its core idea of the present application. Those of ordinary skill in the art should understand that they can still modify the technical solution recorded in the foregoing embodiments or make equivalent substitutions for some of the technical features. These modifications or substitutions does not make the essence of the corresponding technical solution deviate from the scope of the technical solution of each embodiment of the present application.

The components of accompanying figures are marked as follows:

100. robot; 200. photovoltaic panel array;
1. vehicle body; 2. camera;
3. light supplement device; 4. gyroscope;
5. positioning sensor; 6. data processing device;
20. photovoltaic panel; 21. upper edge line;
22. lower edge line; 23. left edge line;
24. right edge line; 51. processor;
52. memory; 11. motor;
12. machine head; 13. body.

## Claims

1. A robot straight line movement controlling method, comprising the following steps:

a direction setting step, controlling a robot to walk along a preset direction on a photovoltaic panel array, wherein the robot comprises a vehicle body;
an image acquisition step, acquiring real-time images of both sides of the vehicle body, wherein a display content of the real-time image is a part of the photovoltaic panel array;
a coordinate transformation step, establishing a world coordinate system with a center point of the vehicle body as an origin, and performing coordinate transformation processing on the real-time image of each frame;
a reference line identification step, identifying a reference line from the real-time image of each frame;
a reference line coordinate calculation step, calculating a coordinate set of the straight line where the reference line is positioned in the world coordinate system;
a distance and angle comparison step, calculating a real-time distance between the reference line and the origin, and determine whether the real-time distance is within a preset distance threshold range; and at the same time, obtaining a real-time angle of the angle between an actual walking direction of the vehicle body and a preset direction, and determining whether the real-time angle is within a preset angle threshold range; and

a direction adjustment step, controlling the vehicle body to adjust the direction of movement to the left or to the right when the real-time distance outside the preset distance threshold range and the real-time angle within the preset angle threshold range until the distance difference is within the preset distance threshold range, returning to the direction setting step.

2. The robot straight line movement controlling method of claim 1, wherein the reference line identification step specifically comprises the following steps:

identifying at least one visible line segment from each frame of the real-time image, wherein each of the visible line segments is an image of a frame of the photovoltaic panel in the real-time image;

calculating a slope and a position of the straight line of each visible line segment in the world coordinate system;

selecting at least one straight line with a slope within a preset slope range from the straight lines where the visible line segment is positioned as a candidate straight line; and

calculating a distance between each of the candidate straight lines and the origin;

selecting at least one straight line closest to the origin from the at least one candidate straight line as a reference line.

3. The robot straight line movement controlling method of claim 2, wherein in the reference line identification step:
after the step of calculating the distance between each candidate straight line and the origin, comprising the following step:
determining whether a distance between each candidate straight line and the origin is within the preset distance threshold range; if not, filtering out the candidate straight line.

4. The robot straight line movement controlling method of claim 1, wherein after the image acquisition step, further comprising the following steps:
determining whether a brightness of the real-time image is less than a preset brightness threshold; if yes, activating the light supplement device and returning to the step of acquiring images on both sides of the vehicle body.

5. The robot straight line movement controlling method of claim 1, wherein the direction adjustment steps comprising the following steps:

obtaining a maximum threshold and a minimum threshold according to the preset distance threshold range;

obtaining a camera number corresponding to the real-time image showing the reference line;

determining a relative position of the reference line and the vehicle body according to a relative position of the camera and the vehicle body;

controlling the vehicle body to adjust its direction to the left when the reference line is positioned on the left side of the vehicle body and the distance difference is greater than the maximum threshold, or when the reference line is positioned on the right side of the vehicle body and the distance difference is less than the minimum threshold; and

controlling the vehicle body to adjust its direction to the right when the reference line is positioned on the right side of the vehicle body and the distance difference is greater than the maximum threshold, or when the reference line is positioned on the left side of the vehicle body and the distance difference is less than the minimum threshold.

6. A data processing device, comprising:

a memory for storing an executable program code; and

a processor connected to the memory, and running a computer program corresponding to the executable program code by reading the executable program code to execute the robot straight line movement controlling method according to any one of claims 1-5.

7. A robot, comprising the data processing device according to claim 6.

8. The robot of claim 7, further comprising:

a vehicle body capable of walking on a photovoltaic panel array; and

cameras installed on the left and right sides of the vehicle body; wherein lens of the camera faces the photovoltaic panel array to acquire images on both sides of the vehicle body;

installing the data processing device in the vehicle body and connected to the camera.

9. The robot of claim 8, further comprising:

a light supplement device connected to the data processing device;
wherein the light supplement device is activated when a brightness of the image acquired by the camera is less than or equal to a preset brightness threshold.

10. The robot of claim 7, further comprising:
a gyroscope connected to the data processing device, wherein the gyroscope is configured to obtain the real-time walking direction of the vehicle body in real time.

FIG. 1

FIG. 2

FIG. 3

FIG. 4

FIG. 5

start

S1

direction setting step

S2

image acquisition step

S3

determining whether a brightness of a real-time image is less than a preset brightness threshold

if yes → 

S41

activating the light supplement device and return to the step of acquiring images of both sides of the vehicle body

if no

S4

coordinate transformation step

S5

reference line identification step

S6

reference line coordinate calculation step

S7

distance and angle comparison step

S8

direction adjustment step

end

FIG. 6

S501

identifying at least one visible line segment from each frame of the real-time image, wherein each of the visible line segments is an image of a frame of the photovoltaic panel in the real-time image

S502

calculating a slope and a position of the straight line of each visible line segment in the world coordinate system

S503

selecting at least one straight line with a slope within a preset slope range as a candidate straight line from the straight lines where the visible line segment is positioned

S504

calculating a distance between each of the candidate straight lines and the origin

S505

determining whether a distance between each candidate straight line and the origin is within the preset distance threshold range

if not →

S507

filtering out the candidate straight line

if yes

S506

selecting at least one straight line closest to the origin from the at least one candidate straight lines as a reference line

FIG. 7

S801

obtaining a maximum threshold and a minimum threshold according to a preset distance threshold range

S802

obtaining a maximum threshold and a minimum threshold according to a preset distance threshold range

S803

obtaining a maximum threshold and a minimum threshold according to a preset distance threshold range

S811

If the reference line is positioned on the left side of the vehicle body, determining whether the distance difference is greater than the maximum threshold

S821

If the reference line is positioned on the right side of the vehicle body, determining whether the distance difference is greater than the maximum threshold

If yes

If no

S812

adjusting the direction to the left

S813

determining whether the distance difference is less than the minimum threshold

If yes

S814

adjusting the direction to the right

If no

S815

no adjustment in direction

If yes

S822

adjusting the direction to the right

If no

S823

determining whether the distance difference is less than the minimum threshold

If yes

S824

adjusting the direction to the left

If no

S825

no adjustment in direction

FIG. 8

## INTERNATIONAL SEARCH REPORT

International application No.

**PCT/CN2023/090117**

### A. CLASSIFICATION OF SUBJECT MATTER

G05D 1/02(2020.01)i

According to International Patent Classification (IPC) or to both national classification and IPC

### B. FIELDS SEARCHED

Minimum documentation searched (classification system followed by classification symbols)

IPC: G05D 1/-

Documentation searched other than minimum documentation to the extent that such documents are included in the fields searched

Electronic data base consulted during the international search (name of data base and, where practicable, search terms used)

CNTXT, ENTXTC, DWPI, 中国期刊网全文数据库, CJFD: 机器人, 直线, 行进, 行走, 清扫, 清洁, 控制, 调节, 调整, 图像, 拍摄, 拍照, 参考线, 参照线, 识别, 距离, 方向, 角度, 阈值, 比较, 对比, robot, straight 2w line, walk+, clean+, control+, adjust +, image?, reference 5d line, recogn+, distance, direction, angle, threshold, compar+

### C. DOCUMENTS CONSIDERED TO BE RELEVANT

| Category* | Citation of document, with indication, where appropriate, of the relevant passages | Relevant to claim No. |
|---|---|---|
| PX | CN 114942635 A (SUZHOU RADIANT PHOTOVOLTAIC TECHNOLOGY CO., LTD.) 26 August 2022 (2022-08-26) claims 1-10, description, paragraphs [0039]-[0110], and figures 1-8 | 1-10 |
| X | CN 109782772 A (ZHEJIANG GUOZI ROBOTICS CO., LTD.) 21 May 2019 (2019-05-21) description, paragraphs [0049]-[0091], and figures 1-3 | 1, 4-10 |
| Y | CN 109782772 A (ZHEJIANG GUOZI ROBOTICS CO., LTD.) 21 May 2019 (2019-05-21) description, paragraphs [0049]-[0091], and figures 1-3 | 2-3 |
| Y | WO 2014196480 A1 (SINFONIA TECHNOLOGY CO., LTD.) 11 December 2014 (2014-12-11) description, paragraphs [0015]-[0016] and [0035]-[0060], and figures 1-12 | 2-3 |
| A | CN 105204504 A (713TH RESEARCH INSTITUTE OF CHINA SHIPBUILDING INDUSTRY CORP.) 30 December 2015 (2015-12-30) entire document | 1-10 |

☑ Further documents are listed in the continuation of Box C.    ☑ See patent family annex.

| | |
|---|---|
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
|---|---|
| **31 July 2023** | **04 August 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

International application No.

**PCT/CN2023/090117**

### C.    DOCUMENTS CONSIDERED TO BE RELEVANT

| Category* | Citation of document, with indication, where appropriate, of the relevant passages | Relevant to claim No. |
|---|---|---|
| A | CN 106325276 A (SUZHOU RADIANT AUTOMATIC EQUIPMENT TECHNOLOGY CO., LTD.) 11 January 2017 (2017-01-11) <br> entire document | 1-10 |
| A | CN 108008723 A (ZHEJIANG GUOZI ROBOTICS CO., LTD.) 08 May 2018 (2018-05-08) <br> entire document | 1-10 |
| A | CN 109298715 A (SUZHOU RADIANT AUTOMATIC EQUIPMENT TECHNOLOGY CO., LTD.) 01 February 2019 (2019-02-01) <br> entire document | 1-10 |

Form PCT/ISA/210 (second sheet) (July 2022)

**INTERNATIONAL SEARCH REPORT**
**Information on patent family members**

International application No.

**PCT/CN2023/090117**

| Patent document cited in search report | | | Publication date (day/month/year) | Patent family member(s) | | | Publication date (day/month/year) |
|---|---|---|---|---|---|---|---|
| CN | 114942635 | A | 26 August 2022 | None | | | |
| CN | 109782772 | A | 21 May 2019 | None | | | |
| WO | 2014196480 | A1 | 11 December 2014 | JP | 2015013281 | A | 22 January 2015 |
| | | | | JP | 2015138873 | A | 30 July 2015 |
| | | | | JP | 6299231 | B2 | 28 March 2018 |
| CN | 105204504 | A | 30 December 2015 | CN | 105204504 | B | 16 February 2018 |
| CN | 106325276 | A | 11 January 2017 | EP | 3518065 | A1 | 31 July 2019 |
| | | | | EP | 3518065 | B1 | 21 July 2021 |
| | | | | WO | 2018053983 | A1 | 29 March 2018 |
| | | | | US | 2020012291 | A1 | 09 January 2020 |
| | | | | US | 10802500 | B2 | 13 October 2020 |
| | | | | JP | 2019530094 | A | 17 October 2019 |
| | | | | JP | 6706392 | B2 | 03 June 2020 |
| | | | | CN | 106325276 | B | 25 June 2019 |
| CN | 108008723 | A | 08 May 2018 | None | | | |
| CN | 109298715 | A | 01 February 2019 | CN | 109298715 | B | 07 December 2021 |

Form PCT/ISA/210 (patent family annex) (July 2022)

**EP 4 521 183 A1**

**Patent documents cited in the description**

- CN 202210469203X

- CN 106325276 B